Europäisches Patentamt

European Patent Office

Office européen des brevets

(11) Publication number: **0 174 831**
**B1**

# EUROPEAN PATENT SPECIFICATION

(45) Date of publication of patent specification: **27.12.90**

(21) Application number: **85306423.6**

(22) Date of filing: **10.09.85**

(51) Int. Cl.[5]: **B 29 C 37/00,** B 26 D 7/00 //
B29K21:00

(54) **Apparatus and method for cutting and unbonding elastic bands.**

(30) Priority: **14.09.84 US 651275**

(43) Date of publication of application:
**19.03.86 Bulletin 86/12**

(45) Publication of the grant of the patent:
**27.12.90 Bulletin 90/52**

(84) Designated Contracting States:
**AT BE CH DE FR GB IT LI LU NL SE**

(56) References cited:
**DE-A-2 030 018**
**DE-B-2 042 817**
**FR-A-1 254 433**

(73) Proprietor: **RUBBER BAND TECHNOLOGY, LTD.,**
**2712 South 16th Avenue**
**Yakima, Washington 98909 (US)**

(72) Inventor: **Lewis, Paul A.**
**31 Alameda Street**
**Salinas California 93901 (US)**

(74) Representative: **Matthews, Howard Nicholas**
**et al**
**BROOKES & MARTIN Incorporating**
**MATTHEWS, HADDAN & CO. High Holborn**
**House 52/54, High Holborn**
**London, WC1V 6SE (GB)**

Courier Press, Leamington Spa, England.

## Description

The present invention relates, in general, to the formation of elastic bands and, more particularly, relates to the cutting of elastic bands from tubular band stock and the unbonding or separating of the sides or cut edges of the bands after cutting according to the preambles of claims 1 and 18, respectively.

Elastic or rubber bands are formed from various combinations of synthetic and natural rubbers and filler materials. The fillers are used to provide the elastic bands with a variety of properties, and more particularly, they also are used to control the elasticity or elongation of the bands. Generally, as the percentage of fillers increase, the band elasticity decreases, and conversely the most elastic of the elastic bands are virtually entirely formed from synthetic or natural rubber.

While there are many applications in which a highly elastic, (e.g., 300 to 800 percent elongation) elastic band is desirable, there are serious problems in the formation and manipulation of such bands. Most typically, elastic bands are cut from tubular elastic band stock having a diameter equal to the desired band length in the relaxed condition. Cutting can be effected by a fly cutter, particularly for narrow widths, or a scissors-type of cutter.

In prior art elastic band cutting apparatus the bands are usually simply cut and then collected. Thus, the cutting apparatus merely deposits the bands in a jumble in a collecting bin with a random orientation. For bands which have a high degree of elastomeric compounds, the cutting process also often bonds or welds the opposite sides of the bands together. This bonding is particularly common for the scissor-type of cutting apparatus.

Attempts have been made to try to separate the bonded edges of elastic bands. One approach is simply agitation of the jumbled collection of cut bands. Another approach is to employ suction apparatus which engages and vacuum grips opposite sides of the bonded band during or immediately after the cutting process. The vacuum gripping units are then separated while the vacuum is applied to attempt to pull the sides of the bands apart and break the bonds created during cutting.

Such vacuum unbonding apparatus has been found to have limited effectiveness. First, it is best employed with relatively wide elastic bands. Second, the vacuum is often broken before the bond between the cut edges of the band is broken. Lastly, after separation, the bands are usually deposited in a collector in random orientations so that subsequent use of the bands requires a band sorting and orienting apparatus.

While apparatus have been evolved for the extraction of individual rubber bands from a randomly oriented collection of rubber bands, such apparatus usually severely limit the speed with which bands can be applied to an end use.

Thus, cutting apparatus typically produces cut elastic bands much faster than band sorting and orienting apparatus can extract and orient bands from a pile of randomly oriented bands. The problems of sorting and orienting bands become even more severe as the band width decreases and as the band elasticity increases.

West German Patent Specification No. DE—B—2,042,817 discloses rubber band apparatus which is typical of the prior art, in which a knife is used to cut bands from a tube of the material from which the bands are to be formed.

According to this known method a suction apparatus is employed which engages and vacuum grips opposite sides of the bonded band during or immediately after the cutting process. The vacuum gripping units are then separated while the vacuum is applied to attempt to pull the sides of the bands apart and break the bonds created during cutting.

Accordingly, it is an object of the present invention to provide a method and apparatus for cutting and unbonding elastic bands which is particularly well suited for use with elastic bands having a high degree of elasticity.

It is a subsidiary object of the present invention to provide a method and apparatus for cutting elastic bands which controls orientation of the bands for immediate use in band applying equipment.

A further object of the present invention is to provide elastic band cutting apparatus which is capable of high production and yet produces open elastic bands which may be output in a predetermined orientation onto band applying equipment.

Still another object of the present invention is to provide an elastic band cutting and unbonding method which is fast and effective.

Other objects of the present invention are to provide an apparatus and method for cutting and unbonding elastic bands which is durable, reliable in operation, employs a minimum number of moving parts, is easy to maintain, is economical to construct and operate and can be integrated for use with a wide range of auxiliary equipment.

The elastic band cutting and unbonding apparatus and method of the present invention have other objects and features of advantage which will be apparent from or are set forth in more detail in the accompanying drawings and following description of the preferred embodiment.

According to the invention there is provided apparatus for cutting elastic bands or the like from the tubular stock including stock holding means, stock feeding means mounted proximate said holding means and formed for periodic advancement of said stock to said holding means, cutting means having a movable blade mounted approximate said holding means for displacement to effect cutting of said stock, and band gripping means mounted proximate said movable blade and formed to grip said bands as said bands are cut from said stock, characterised in that said gripping means includes anvil means movably mounted to said apparatus in substantial alignment with said movable blade, said anvil means being biased toward said movable blade to engage and grip said bands between said movable blade and said anvil means, said anvil means being displaceable by and in the direction of said movable blade while gripping said bands during cutting from said stock; and in that one of said anvil means and said movable blade is mounted for movement in a direction along the cutting edge of the movable blade while gripping said bands to laterally displace the cut adjacent edges of said bands sufficiently to break any bonding together of said edges caused during cutting.

Further according to the invention there is provided a method for cutting elastic bands or the like from the tubular stock including stock holding means, feeding the stock periodically to advance it to stock holding means, holding the stock in the holding means between feeding, cutting an elastic band from the stock with a movable blade mounted proximate said holding means for displacement to effect cutting of said stock while simultaneously gripping the band with band gripping means mounted proximate said movable blade and formed to grip a band as it is cut from said stock; characterised in that said gripping means includes anvil means movably mounted to said apparatus in substantial alignment with said movable blade, said anvil means being biased toward said movable blade to engage and to grip a band between said movable blade and said anvil means as it is so cut; in that the anvil means is displaced by and in the direction of said movable blade while gripping a band during cutting from said stock; and in that one of said anvil means and said movable blade is moved in a direction along the cutting edge of the movable blade while gripping a band to laterally displace the cut adjacent edges of said band sufficiently to break any bonding together of said edges during cutting.

In the accompanying drawings:-

FIGURE 1 is a front elevation view of an elastic band cutting and unbonding apparatus constructed in accordance with the present invention.

FIGURE 2 is a side elevation view, in cross-section, taken substantially along a plane in line 2-2 of Figure 1.

FIGURE 3 is a front elevation view corresponding to Figure 1 with the cutting blade shown in a moved position.

FIGURE 4 is a side elevation view, in cross-section, taken substantially along the plane of line 4-4 in Figure 3.

FIGURE 5 is a front elevation view corresponding to Figures 1 and 3 with the cutting blade in a further moved position.

FIGURE 6 is a side elevation view, in cross-section, taken substantially along the plane of line 6-6 in Figure 5.

FIGURE 7 is a side elevation view, in cross-section, corresponding to Figure 6 with the cutting apparatus in a further moved position showing completion of cutting of the band.

FIGURE 8 is a side elevation view, in cross-section, corresponding to Figure 7 with the cutting apparatus in a further moved position showing ejection of the cut band onto the manipulating apparatus.

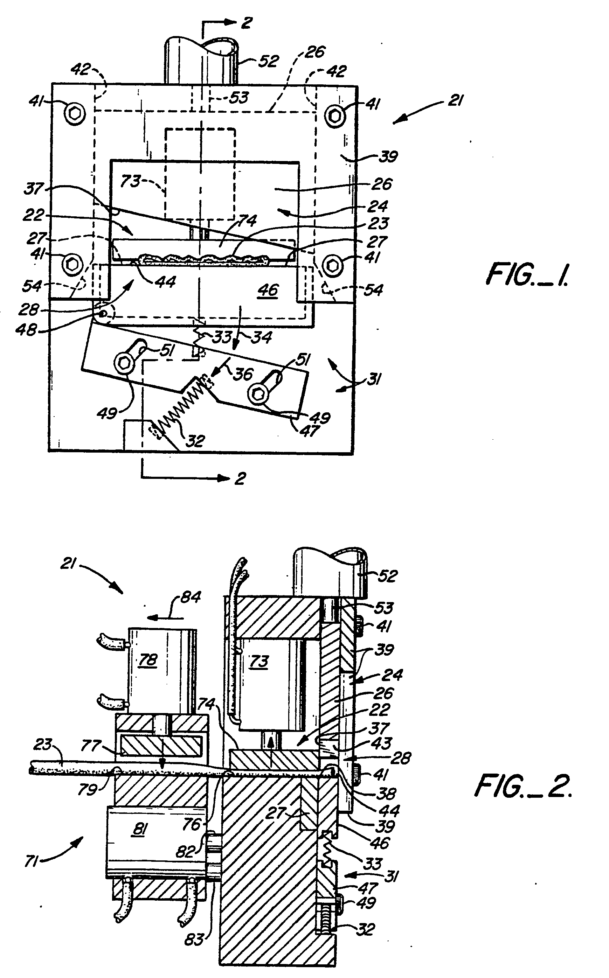

Referring now to Figures 1 and 2, the elastic band cutting and separating apparatus of the present invention, generally designated 21, can be seen to include holding means 22 formed to grip and hold tubular elastic band stock 23. Reciprocally mounted proximate and in front of holding means 22 is a cutting means, generally designated 24, including movable blade 26 and fixed blade 27. The elastic band cutting apparatus of the present invention further includes gripping means, generally designated 28, mounted proximate movable blade 26 and formed to grip elastic bands as they are cut from stock 23.

Prior art elastic band cutting apparatus, particularly of the scissors-type, has included apparatus as broadly described above. The cutting apparatus of the present invention, however, is formed to enable gripping and control of the elastic band after it is cut from the tubular stock and is further formed to enable breaking of the bond which typically forms between the opposed cut edges of the elastic bands so that the bands can be opened and immediately transferred to a band manipulating or applying device. Thus, the band cutting apparatus of the present invention is constructed so as to control the elastic band after it is cut and open it up and deposited on a band applying device so that the need for sorting and separating equipment to separate and orient the bands from a pile of randomly oriented bands is eliminated.

In order to effect gripping of elastic bands so that they can be controlled during the cutting process and thereafter, the apparatus of the present invention is formed with gripping means that includes anvil means, generally designed 31, mounted to band cutting apparatus 21 in substantial alignment with movable blade 26, as best may be seen in Figure 2. Anvil means 31 is biased, for example, by resilient spring biasing elements 32 and 33, toward movable blade 26 to engage and grip elastic bands between the movable blade and anvil 31. Additionally, the anvil means 31 of the apparatus of the present invention is displaceable by and in a direction of movement of blade 26, as indicated by arrows 34 and 36, while the anvil and blade grip the bands during cutting.

As will be seen, the cutting apparatus of the present invention preferably includes a guillotine-shaped cutting blade 26 in which the sloped inner edge 37 that progressively shears down across cutting edge 38 of the second or fixed blade 27 so as to shear elastic bands from stock 23. Movable blade 26 is slidably mounted to the blade cutting apparatus by an inverted U-shaped guide plate 39 which is mounted by fasteners 41 to the apparatus and includes a blade guide channel 42 in which blade 26 slidably moves. Both of blades 26 and 27 are preferably formed of high strength alloy steels which will maintain the cutting edges 37 and 38 in a sharp condition which will effect shearing of the elastic band stock.

In order to enable gripping with anvil 31, movable blade 26 preferably includes a substantially planar surface 43 which extends parallel to the longitudinal axis of stock 23 so that surface 43 and an upwardly facing surface 44 on anvil element 46 will engage opposed sides of the elastic bands as it is sheared from stock 23. As will be seen, it is preferable that anvil surface 44 be positioned at about the same height or somewhat below the upper surface of second or fixed blade 27. This positioning affords immediate support for the band as it is being cut by movable blade 26 and insures ejection of cut bands, as will be described in more detail hereafter. It has been found, however, that positioning anvil surface 44 below the top surface of fixed blade 27 is also acceptable in that the movable blade will urge the cut band down against the anvil before the individual band is completely severed from the band stock and cut bands will still be ejected upon advancement of the stock for the next cut.

In order to allow direct use of elastic bands which are cut by the cutting apparatus of the present invention in band applying or manipulating devices, the cutting apparatus of the present invention further includes a structure which will break the bonds which typically occur between the opposed edges of the bands as a result of shearing. As the elasticity of the tubular stock 23 increases, the tendency of the cutting process to weld or bond adjacent edges of the band together during cutting increases. As can be seen in Figure 1, various portions along the length of band stock 23 are bonded together as a result of the previous cut of the tubular stock. Attempts have been made in the prior art to separate these sections or open the band up by using vacuum gripping apparatus which pull the cut band apart. Such apparatus, however, is only effective if it can maintain a good vacuum with the band, which limits the use of the vacuum apparatus to bands having a substantial width dimension. The elastic band cutter of the present invention is intended for use in cutting bands down to and below a sixteenth of an inch in width, making use of vacuum gripping apparatus extremely difficult and relatively ineffective. Even for wide bands, the tendency is for the vacuum to break and the apparatus not to be reproducibly effective in breaking the bonds which occur.

Separation of the bands and breaking of the bonds is accomplished in the cutting apparatus of the present invention by forming one of anvil means 31 and movable blade 26 for movement in a direction along cutting edge 37 of the movable blade while gripping the bands to laterally displace the cut, adjacent, side edges of the bands sufficiently to break any bonding of these edges caused during cutting. In the preferred form shown in the drawing, anvil means 31 is mounted for movement in a direction along cutting edge 37 of the movable blade. Such lateral movement can be accomplished by forming the anvil means as a slide plate assembly including first slide plate 46 positioned to engage the band with surface 44 and a second slide plate 47 mounted on the remote side of slide plate 46 with respect to blade 26 and stock 23. First slide plate 46 is pivotally mounted at 48 to the second slide plate and the second slide plate is slidably mounted to apparatus 21 by means of pins 49 which slidably pass through slots 51 in the second slide plate.

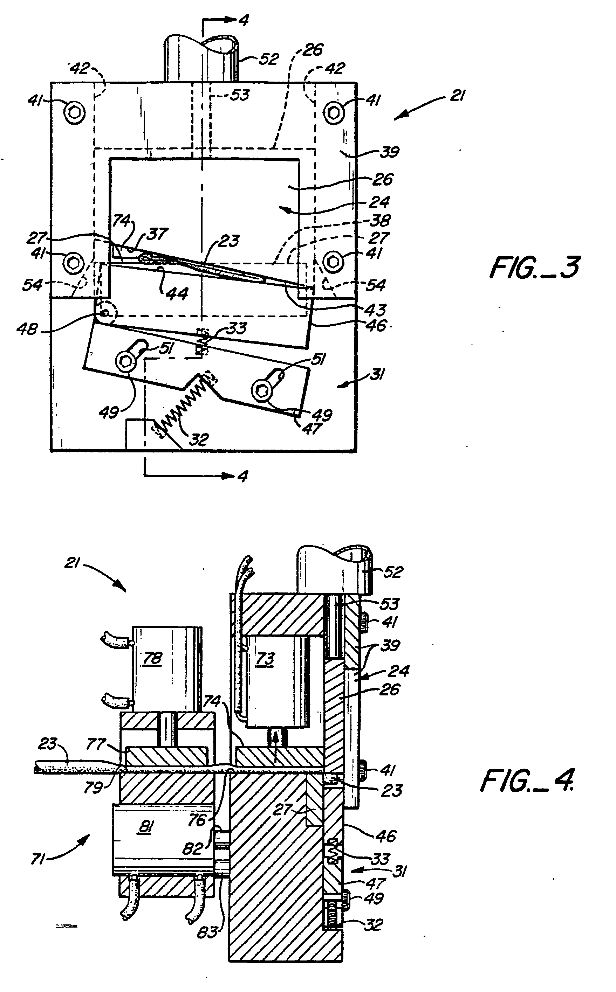

Operation of the anvil means or assembly 31 to produce a lateral displacement which will break the bonds between adjacent edges of the cut bands can best be understood by following the cutting process from the position shown in Figures 1 and 2 through the positions shown in Figures 3-6. In Figure 3, movable blade 26 can be seen to have cut proximately one-half of an elastic band from stock 23. As will be seen, pneumatic or hydraulic actuator 52 has displaced piston 53, and thus cutting blade 26, downwardly until the sloped edge 37 has passed across the upper edge 38 of the fixed or second blade 27. This downward displacement urges the cut band against upper surface 44 of first anvil plate 46, which has been downwardly displaced against biasing spring 33 about pivot point 48. As shown in Figure 3, therefore, the right end of the cut rubber band is being gripped between surfaces 43 and 44 of the blade and anvil, respectively, and the anvil has been angularly displaced to an angle more closely conforming to the slope of cutting edge 37. Front guide plate 39 is relieved at 54 to permit pivoting of anvil plate 46. As shown in Figures 3 and 4, the anvil and blade are merely gripping the cut portion of the band. There has been no lateral displacement or movement to effect unbonding or separation of the cut edges of the band.

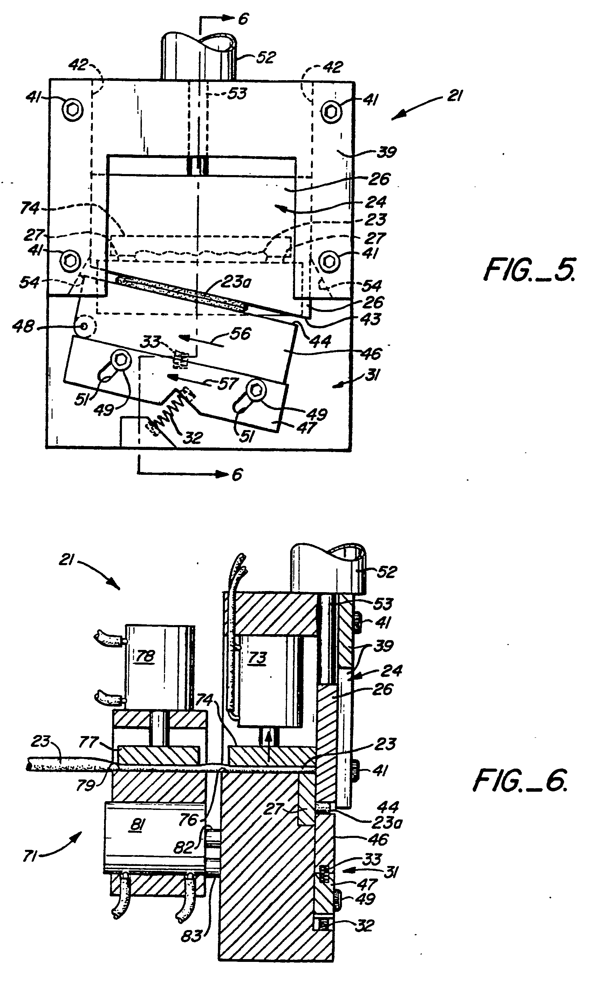

In Figures 5 and 6, movable blade 26 has cut completely through tubular stock 23 to produce a cut band 23a. Pivotal anvil member 46 has pivoted about 48 to a position in which band engaging surface 44 is substantially parallel to blade surface 43 with the cut band 23a gripped between the anvil and the movable blade. Additionally, slide plate 47 has been displaced downwardly against spring 32, with the result that the slots 51 (preferably at an acute angle with respect to the direction of motion of blade 26) and pins 49 have produced a lateral shifting of entire anvil assembly 31, as indicated by arrows 56 and 57. The lateral shift of the anvil assembly causes cut band 23a to have its opposite edges shifted in opposite longitudinal directions along the band. The band 23a is, in effect, rolled along its length between the anvil and the cutting blade to thereby break any bonds which may have occurred during the shearing process on both sides of band 23a. In Figure 5 band 23a is shifted to the left of stock 23, and the sliding-rolling between the anvil and the blade is highly effective in breaking any of the synthetic or natural rubber bonding produced by the shearing action of the blade.

As will be appreciated, it is an advantage of the present invention that the lateral displacement is effected by a downward displacement of blade 26. Thus, the actuator 52 can be used to not only drive the blade through the band, but shift the anvil so as to cause separation of the edges of the cut band. It is also possible, however, to drive anvil means 31 by an independent actuator, to laterally displace blade 26 by means of guide channels and/or an independent actuator or a combination of motion of the movable blade and anvil in opposite directions.

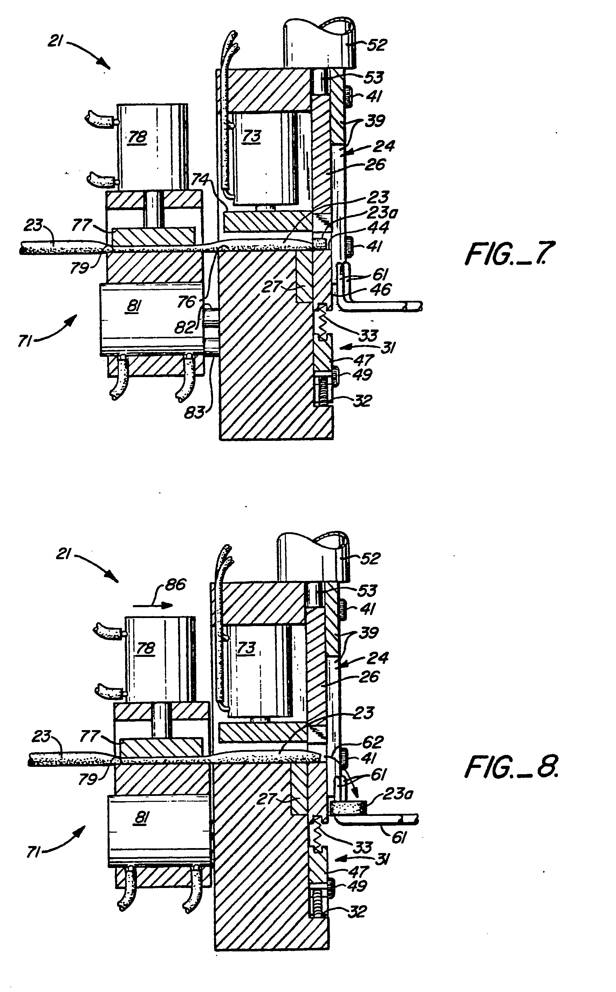

After shifting of the cut band 23a in a lateral direction to produce separation of the band edges, movable blade 26 is retracted to the position as shown in Figures 1 and 7, with the result that anvil plate 46 and 47 return to their original position with the cut band 23a separated or opened up, as shown in Figure 7, and resting on upper surface 44 of anvil and slide plate 46. Also shown in Figure 7 are a plurality of fingers 61 positioned proximate and below a surface 44 of anvil and slide plate 46. As will be more fully described hereinafter, the elastic band stock can be axially advanced (Figure 8) to eject cut band 23a, as indicated by arrow 62, down over fingers 61, which fingers can be a part of a band manipulating or applying apparatus that will, for example, expand the band and place it over a product or bundle of products. Such band expanding and applying apparatus is more fully set forth in my co-pending application entitled "Elastic Band Application System" and will not be described in detail herein.

Thus, from the time of shearing of the elastic band from stock 23 until its positioning on elastic band manipulating apparatus, the cutting apparatus of the present invention controls the orientation of the bands and thus enables the elimination of sorting apparatus of the kind which would be required to extract bands from a randomly oriented pile of bands.

The elastic band cutting apparatus in the present invention further includes stock feeding means, generally designated 71, and shown in Figures 2, 4, 6, 7 and 8. Stock feeding means 71 is mounted proximate stock holding means 22 and is formed for periodic advancement of the elastic band stock to the holding means. In Figure 2, holding means 22 can be seen to include an actuator 73 which drives a clamping plate 74 to press the stock against platform surface 76 and the upper surface of fixed blade 27.

Feeding means 71 also preferably includes a clamping plate 77 driven by actuator 78 that will clamp stock 23 down against support surface 79, but which is shown in a raised position in Figure 2. In order to reciprocate feeding assembly 71, a second actuator 81 with drive piston 82 is provided so that the entire feeding assembly can be displaced on guide rails 83 to provide a reciprocating carriage suitable for advancement of the stock. As shown in Figure 2, the clamping plate 77 is open and the entire assembly has been reciprocated to the left, as shown by arrow 84, so as to be in a position for clamping against the stock to advance the same. In Figures 4 and 6, clamping plate 77 has been clamped down against the stock so as to grip the same. In Figure 7 the holding plate 74 has been moved upwardly so as to free the stock for axially displacement, and in Figure 8, the entire carriage has been displaced to the right as indicated by arrow 82, to a position proximate the cutter so as to advance the stock and eject the cut band 23a. As will be apparent, it is possible to maintain the feeding assembly 71 in a position of Figure 8, rather than Figure 2, during the band shearing process and then to reciprocate the carriage away from the cutter, clamp the stock, and shuttle the carriage back to the cutter so as to advance the stock.

As will be understood, the stroke of actuator 81 can readily be varied so as to change the width dimension of band 23a. Using apparatus constructed in accordance with the present invention bands have been cut down to a width of ³⁄₆₄ inches (1.2 millimeters). Wide bands, of course, are even easier to cut.

The elastic band cutting method of the present invention includes the steps of holding band stock 23, cutting an individual band 23a from the stock, releasing the stock and advancing the band to enable cutting of another band. These steps, however, are common to the prior art, and the improvement in the band cutting method of the present invention is comprised of gripping the band as it is cut between movable blade 27 and anvil means 31. Additionally, the present method includes the steps of cutting the band by shearing and displacing opposed cut edges of band 23a longitudinally in opposite directions with respect to each other to break the bonds between the edges which are caused during the shearing step. Finally, the present method includes the step of releasing and ejecting the band from between the movable blade and anvil directly onto band manipulating means 61.

## Claims

1. Apparatus for cutting elastic bands (23a) or the like from the tubular stock (23) including stock holding means (22), stock feeding means (71) mounted proximate said holding means (22) and formed for periodic advancement of said stock (23) to said holding means (22), cutting means (24) having a movable blade (26) mounted proximate said holding means (22) for displacement to effect cutting of said stock (23), and band gripping means (28) mounted proximate said movable blade (26) and formed to grip said bands (23a) as said bands (23a) are cut from said stock (23), characterised in that said gripping means (28) includes anvil means (31) movably mounted to said apparatus in substantial alignment with said movable blade (26), said anvil means (31) being biased toward said movable blade (26) to engage and grip said bands (23a) between said movable blade (26) and said anvil means (31), said anvil means (31) being displaceable by and in the direction of said movable blade (26) while gripping said bands (23a) during cutting from said stock (23); and in that one of said anvil means (31) and said movable blade (26) is mounted for movement in a direction along the cutting edge (37) of the movable blade while gripping said bands (23a) to laterally displace the cut adjacent edges of said bands (23a) sufficiently to break any bonding together of said edges caused during cutting.

2. Apparatus as claimed in Claim 1, characterised in that said cutting means (24) includes a second blade (27) formed and mounted to cooperate with said holding means (22) to hold said stock (23) for cutting and formed to cooperate with said movable blade (26) to shear said stock (23) to effect cutting, and said movable blade (26) and said anvil means (31) being mounted proximate and outwardly of said second blade (27), and said anvil means (31) being biased to engage and support a side of said stock (23) opposite said movable blade (26) at a height about equal to the height of said second blade (27).

3. Apparatus as claimed in Claim 2, characterised in that said movable blade (26) is slidably mounted to said apparatus and has a sloped cutting edge (37) formed to progressively cut across said stock (23) as said edge (37) meets said second blade (27).

4. Apparatus as claimed in Claim 1, characterised in that said movable blade (26) has a sloped cutting edge (37) formed to progressively cut said stock (23), and said anvil means (31) is mounted for movement into substantially parallel alignment with said cutting edge (37) as said movable blade (26) cuts said stock (23).

5. Apparatus as claimed in Claim 4, characterised in that said movable blade (26) and said anvil means (31) have substantially planar surfaces (43, 44) extending substantially parallel to the longituding axis of said stock (23).

6. Apparatus as claimed in Claim 1, characterised in that said anvil means (31) is mounted for movement in a direction along said cutting edge (37) of said movable blade (26).

7. Apparatus as claimed in Claim 6, characterised in that said anvil means (31) is provided by a reciprocally mounted slide plate assembly (46, 47) resiliently biased toward said blade (26).

8. Apparatus as claimed in Claim 7, characterised in that said slide plate assembly (46, 47) includes a first slide plate (46) positioned to engage said bands (23a) and a second slide plate (46) mounted on the remote side of said first slide plate (46) from said movable blade (26).

9. Apparatus as claimed in Claim 8, characterised in that said first slide plate (46) is pivotally mounted to said second slide plate (47), and said second slide plate (47) is slidably mounted to said apparatus (21) for lateral displacement relative to said movable blade (26) upon displacement by said movable blade (26).

10. Apparatus as claimed in any one of Claims 1 to 9, characterised in that said gripping means (28) is further formed for release of said bands (23a) after lateral displacement of the side edges of said bands, and said stock feed means (71) and said holding means (22) are formed to displace the cut band (23a) from between said movable blade (26) and said anvil means (31) upon advancement of said stock (23) after release by said gripping means (28).

11. Apparatus as claimed in Claim 10, characterised in that said movable blade (26) is mounted for displacement away from said anvil means (31) to effect release of said bands (23a).

12. Apparatus as claimed in Claim 1, characterised in that:

said movable blade (26) is formed with a laterally sloped movable cutting edge (37) and a band engaging surface (43) outwardly of said cutting edge (37), and said movable blade (26) being mounted for sliding reciprocal movement proximate said holding means (28);

said cutting means (24) includes a fixed blade (27) having a fixed cutting edge (38) positioned to cooperate with said movable cutting edge (37) to effect cutting, said fixed blade (27) having a stock engaging surface inwardly of said fixed cutting edge (38) positioned opposite said holding means (28) to cooperate in holding said stock (23) for cutting;

said anvil means (31) includes a slide plate assembly (46, 47) slidably mounted proximate said fixed blade (27) and having a band engaging surface (44) facing said band engaging surface (43) on said movable blade (26); and

one of said anvil means (31) and said movable blade (26) being mounted for movement of the band engaging surface (44, 43) thereof along the band (23a) relative to the band engaging surface (43, 44) of the remainder of said movable blade (26) and said anvil means (31) to effect separation of bonded together edges of the cut bands (23a) after cutting from the stock (23).

13. Apparatus as claimed in Claim 12, characterised in that said band engaging surface (43, 44) on said movable blade (26) and on said anvil means (31) are substantially planar and have substantially the same width dimension, and said slide plate assembly (46, 47) includes a first slide plate (46) and a second slide plate (47), said first slide plate (46) being pivotally coupled to said second slide plate (47) and being biased away from said second slide plate (47), and said second slide plate (47) being slidably mounted to said apparatus (21) and resiliently biased toward said movable blade (46).

14. Apparatus as claimed in Claim 13, characterised in that said second slide plate (47) is mounted for sliding movement at an acute angle with respect to the axis of movement of said movable blade (26).

15. Apparatus as claimed in Claim 12, characterised in that said stock feeding means (71) is formed to advance said stock (23) to said holding means (22) upon release of gripping of said bands (23a) by said movable blade (26) and said anvil means (31) and upon release of said stock (23) by said holding means (28) to thereby eject the cut bands (23a) from said gripping means (28).

16. Apparatus as claimed in Claim 15, characterised in that said stock feeding means (71) is provided by a movable carriage having an adjustable stroke enabling variation of the width of the elastic bands (23a) cut from the stock (23).

17. Apparatus as claimed in Claim 12, and band manipulating means (61) positioned proximate said anvil means (31) for receipt of bands (23a) upon release of gripping between said movable blade (26) and said anvil means (31).

18. A method for cutting elastic bands (23a) or the like from the tubular stock (23) including stock holding means (22), feeding the stock periodically to advance it to stock holding means (22), holding the stock in the holding means between feeding, cutting an elastic band (23a) from the stock with a movable blade (26) mounted proximate said holding means (22) for displacement to effect cutting of said stock (23) while simultaneously gripping the band with ban gripping means (28) mounted proximate said movable blade (26) and formed to grip a band as it is cut from said stock; characterised in that said gripping means includes anvil means 31 movably mounted to said apparatus in substantial alignment with said movable blade, said anvil means being biased toward said movable blade (26) to engage and to grip a band between said movable blade and said anvil means as it is so cut; in that the anvil means is displaced by and in the direction of said movable blade while gripping a band during cutting from said stock; and in that one of said anvil means and said movable blade is moved in a direction along the cutting edge (37) of the movable blade while gripping a band to laterally displace the cut adjacent edges of said band sufficiently to break any bonding together of said edges during cutting.

**Patentansprüche**

1. Vorrichtung zum Schneiden elastischer Bänder (23a) oder dergleichen von einem rohrförmigen Vorrat (23), umfassend Vorratshaltemittel (22), Vorratszuführmittel (71), die nahe der Haltemittel (22) angebracht und ausgebildet sind, um den Vorrat (23) zu den Haltemitteln (22) periodisch vorzuschieben, Schneidmittel (24) mit einer beweglichen Klinge (26), die nahe der Haltemittel (22) zum Verschieben angebracht sind, um ein Schneiden des Vorrats (23) zu bewirken, und Bandgreifimittel (28), die nahe der beweglichen Klinge (26) angebracht und zum Ergreifen der Bänder (23a) ausgebildet sind, wenn die Bänder (23a) von dem Vorrat (23) abgeschnitten werden, dadurch gekennzeichnet,

daß das Greifmittel (28) ein Amboßmittel (31) umfaßt, das an der Vorrichtung beweglich zu der beweglichen Klinge (26) im wesentlichen fluchtend angebracht ist, wobei das Amboßmittel (31) zu der beweglichen Klinge (26) hin vorgespannt ist, um die Bänder (23a) zwischen der beweglichen Klinge (26) und dem Amboßmittel (31) zu erfassen und zu ergreifen, wobei das Amboßmittel (31) beim Ergreifen der Bänder (23a) während des Schneidens von dem Vorrat (23) durch die und in die Richtung der beweglichen Klinge (26) verschiebbar ist, und daß entweder das Amboßmittel (31) oder die bewegliche Klinge (26) zur Bewegung in einer Richtung längs der Schneidkante (37) der beweglichen Klinge während des Ergreifens der Bänder (23a) angebracht ist, um den Schnitt benachbarter Kanten der Bänder (23a) ausreichend seitlich zu verschieben, um während des Schneidens bewirktes Aneinanderhaften der Kanten zu lösen.

2. Vorrichtung nach Anspruch 1, dadurch gekennzeichnet, daß das Schneidmittel (24) eine zweite Klinge (27) umfaßt, die ausgebildet und angebracht ist, um mit den Haltemitteln (22) zum Halten des Vorrats (23) zum Schneiden zusammenzuwirken, und ausgebildet ist, um mit der beweglichen Klinge (26) zusammenzuwirken, um den Vorrat (23) unter Schneidwirkung abzuscheren, wobei die bewegliche Klinge (26) und das Amboßmittel (31) nahe und außerhalb der zweiten Klinge (27) angebracht sind, und wobei das Amboßmittel (31) vorgespannt ist, um eine Seite des Vorrats (23) gegenüber der beweglichen Klinge (26) in einer Höhe etwa gleich der Höhe der zweiten Klinge (27) anzugreifen und zu stützen.

3. Vorrichtung nach Anspruch 2, dadurch gekennzeichnet, daß die bewegliche Klinge (26) an der Vorrichtung verschiebbar angebracht ist und eine geneigte Schneidkante (37) aufweist, die ausgebildet ist, um den Vorrat (23) fortschreitend quer zu durchschneiden, wenn die Kante (37) auf die zweite Klinge (27) trifft.

4. Vorrichtung nach Anspruch 1, dadurch gekennzeichnet. daß die bewegliche Klinge (26) eine geneigte und zum fortschreitenden Durchschneiden des Vorrats (23) ausgebildete Schneidkante (37) aufweist, wobei das Amboßmittel (31) zur Bewegung in im wesentlichen parallele Ausrichtung zu der Schneidkante (37) angebracht ist, wenn die bewegliche Klinge (26) den Vorrat (23) schneidet.

5. Vorrichtung nach Anspruch 4, dadurch gekennzeichnet, daß die bewegliche Klinge (26) und das Amboßmittel (31) im wesentlichen ebene Oberflächen (43, 44) aufweisen, die sich im wesentlichen parallel zu der Längsachse des Vorrats (23) erstrecken.

6. Vorrichtung nach Anspruch 1, dadurch gekennzeichnet, daß das Amboßmittel (31) zur Bewegung in eine Richtung längs der Schneidkante (37) der beweglichen Klinge (26) angebracht ist.

7. Vorrichtung nach Anspruch 6, dadurch gekennzeichnet, daß das Amboßmittel (31) mit einer hin und her beweglich angebrachten Gleitplattenanordnung (46, 47) versehen ist, die in Richtung der Klinge (26) elastisch vorgespannt ist.

8. Vorrichtung nach Anspruch 7, dadurch gekennzeichnet, daß die Gleitplattenanordnung (46, 47) eine zum Ergreifen der Bänder (23a) angeordnete erste Gleitplatte (46) und eine auf der von der beweglichen Klinge (26) entfernten Seite der ersten Gleitplatte (46) angebrachte zweite Gleitplatte (47) umfaßt.

9. Vorrichtung nach Anspruch 8, dadurch gekennzeichnet, daß dle erste Gleitplatte (46) an der zweiten Gleitplatte (47) schwenkbar angebracht ist und die zweite Gleitplatte (47) an der Vorrichtung (21) zum seitlichen Verschieben auf ein Verschieben durch die bewegliche Klinge (26) hin relativ zu der beweglichen Klinge (26) gleitbar angebracht ist.

10. Vorrichtung nach einem der Ansprüche 1 bis 9, dadurch gekennzeichnet, daß das Greifmittel (28) weiterhin ausgebildet ist, um die Bänder (23a) nach dem seitlichen Verschieben der Seitenkanten der Bänder loszulassen, und die Vorratszuführmittel (71) und dle Haltemittel (22) ausgebildet sind, um das geschnittene Band (23a) von zwischen der beweglichen Klinge (26) und dem Amboßmittel (31) auf das Vorschieben des Vorrats (23) hin nach dem Loslassen durch das Greifmittel (28) zu verschieben.

11. Vorrichtung nach Anspruch 10, dadurch gekennzeichnet, daß die bewegliche Klinge (26) zum Verschieben von dem Amboßmittel (31) weg angebracht ist, um ein Loslassen der Bänder (23a) zu bewirken.

12. Vorrichtung nach Anspruch 1, dadurch gekennzeichnet, daß die bewegliche Klinge (26) mit einer seitlich ansteigenden beweglichen Schneidkante (37) und einer außerhalb der Schneidkante (37) das Band angreifenden Oberfläche (43) ausgebildet ist, und die bewegliche Klinge (26) nahe dem Haltemittel (28) zur gleitenden Hin und Herbewegung angebracht ist;

daß das Schneidmittel (24) eine feste Klinge (27) mit einer festen Schneidkante (38) umfaßt, die zum Zusammenwirken mit der beweglichen Schneidkante (37) angeordnet ist, um das Schneiden zu bewirken, wobei die feste Klinge (27) eine den Vorrat angreifende Oberfläche aufweist, die innerhalb der festen Schneidkante (38) gegenüber des Haltemittels (28) angeordnet ist, um beim Halten des Vorrats (23) zum Schneiden mitzuwirken;

daß das Amboßmittel (31) eine Gieitplattenanordnung (46, 47) umfaßt die nahe der festen Klinge (27) verschiebbar angeordnet ist und eine das Band angreifende Oberfläche (44) aufweist, die der das Band angreifenden Oberfläche (43) an der beweglichen Klinge (26) gegenübersteht;

und daß entweder das Amboßmittel (31) oder die bewegliche Klinge (26) angebracht sind, um deren das Band ergreifende Oberfläche (44, 43) längs des Bandes (23a) relativ zur das Band ergreifenden Oberfläche (43, 44) des übrigen Teils der beweglichen Klinge (26) und des Amboßmittels (31) zu bewegen, um eine Trennung der aneinanderhaftenden Kanten der geschnittenen Bänder (23a) nach dem Abschneiden von dem Vorrat (23) zu bewirken.

13. Vorrichtung nach Anspruch 12, dadurch gekennzeichnet, daß die das Band ergreifende Oberflächen (43, 44) an der beweglichen Klinge (26) und an dem Amboßmittel (31) im wesentlichen eben sind und im wesentlichen die gleiche Breitendimension aufweisen, und daß die Gleitplattenanordnung (46, 47) eine erste Gleitplatte (46) und eine zweite Gleitplatte (47) umfaßt, wobei die erste Gleitplatte (46) mit der zweiten Gleitplatte (47) schwenkbar verbunden und von der zweiten Gleitplatte (47) weg vorgespannt ist, und daß die zweite Gleitplatte (47) an der Vorrichtung (21) gleitbar angebracht und zur beweglichen Klinge (46) hin elastisch vorgespannt ist.

14. Vorrichtung nach Anspruch 13, dadurch gekennzeichnet, daß die zweite Gleitplatte (47) zur gleitenden Bewegung in einem spitzen Winkel im Verhältnis zu der Bewegungsachse der beweglichen Klinge (26) angebracht ist.

15. Vorrichtung nach Anspruch 12, dadurch gekennzeichnet, daß die Vorratsnachführmittel (71) ausgebildet sind, um auf das Loslassen des Festhaltens der Bänder (23a) durch die bewegliche Klinge (26) und das Amboßmittel (31) hin und auf das Loslassen des Vorrats (23) durch das Haltemittel (28) hin den Vorrat (23) zu den Haltemitteln (22) vorzuschieben, um dadurch die geschnittenen Bänder (23a) aus dem Greifmittel (28) auszuwerfen.

16. Vorrichtung nach Anspruch 15, dadurch gekennzeichnet, daß das Vorratszuführmittel (71) mit einem beweglichen Schlitten versehen ist, der einen einstallbaren Hub aufweist, um eine Veränderung der Breite der von dem Vorrat (23) abgeschnittenen elastischen Bänder (23a) zu ermöglichen.

17. Vorrichtung nach Anspruch 12 und Bandhandhabemittel (61), die nahe dem Amboßmittel (31) angeordnet sind, um die Bänder (23a) auf das Lösen des Festhaltens zwischen der beweglichen Klinge (26) und dem Amboßmittel (31) hin aufzunehmen.

18. Verfahren zum Schneiden elastischer Bänder (23a) oder dergleichen von einem rohrförmigen Vorrat (24), umfassend Vorratshaltemittel (22), periodisches Zuführen des Vorrats, um diesen zu den Vorratshaitemitteln (22) vorzuschieben, Halten des Vorrats in den Haltemitteln zwischen dem Zuführen, Schneiden eines elastischen Bandes (23a) von dem Vorrat mit einer beweglichen Klinge (26), die nahe der Haltemittel (22) zum Verschieben angebracht ist, um ein Abschneiden des Vorrats (23) während gleichzeitigem Ergreifen des Bandes mit Bandgreifmitteln (28) zu bewirken, welche nahe der beweglichen Klinge (26) angebracht und ausgebildet sind, um ein Band zu ergreifen, wenn es von dem Vorrat abgeschnitten wird;

dadurch gekennzeichnet, daß das Greifmittel ein Amboßmittel (31) umfaßt, das an der Vorrichtung zur beweglichen Klinge im wesentlichen fluchtend beweglich angebracht ist, wobei das Amboßmittel zur beweglichen Klinge (26) hin vorgespannt ist, um ein Band zwischen der beweglichen Klinge und dem Amboßmittel zu erfassen und zu ergreifen, wenn es so geschnitten wird; und daß das Amboßmittel durch die und in die Richtung der beweglichen Klinge verschoben wird, während es ein Band während des Abschneidens von dem Vorrat ergreift; und daß entweder das Amboßmittel oder die bewegliche Klinge in einer Richtung längs der Schneidkante (37) der beweglichen Klinge bewegt wird, während es ein Band ergreift, um die geschnittenen benachbarten Kanten des Bandes ausreichend seitlich zu verlagern, um jedes Aneinanderhaften der Kanten während des Schneidens zu lösen.

**Revendications**

1. Appareil de tronçonnage de bandes élastiques (23) ou d'objets similaires à partir d'une matière première tubulaire (23) comprenant des moyens (22) pour tenir ladite matière, des moyens d'alimentation (71) pour ladite matière, montés à proximité desdits moyens pour tenir (22), et agencés pour faire avancer périodiquement ladite matière première (23) vers lesdits moyens pour tenir (22), des moyens de coupe (24) ayant une lame mobile (26) montée à proximité desdits moyens pour tenir (22), pour couper ladite matière première (23), et des moyens de serrage de bandes (28) montés près de ladite lame mobile (26) et agencés pour serrer lesdites bandes (23a) à mesure que lesdites bandes (23a) sont tronçonnées à partir de ladite matière première, caractérisé en ce que lesdits moyens de serrage (28) comportent des moyens formant une enclume (31) montés mobiles par rapport audit appareil, en alignement substantiel avec ladite lame mobile (26), lesdits moyens formant une enclume (31) étant sollicités vers ladite lame mobile (26) pour s'engager, en les serrant, sur lesdites bandes (23a) entre ladite lame mobile (26) et lesdits moyens formant une enclume (31), lesdits moyens formant une enclume (31) pouvant être déplacés par ladite lame mobile (26) et en direction de celle-ci, tout en serrant lesdites bandes (23a) pendant leur découpage à partir de ladite matière première (23); et en ce qu'un desdits moyens formant une enclume (31) et ladite lame mobile (26) sont montés pour se mouvoir dans un sens longeant le bord coupant (37) de la lame mobile tout en serrant lesdites bandes (23a) pour déplacer latéralement les bords adjacents découpés desdites bandes (23a) suffisamment pour rompre toute adhérence de ces bords entre eux, provoquée lors du tronçonnage.

2. Appareil selon la revendication 1, caractérisé en ce que lesdits moyens de coupe (24) comprennent une deuxième lame (27) agencée et montée pour coopérer avec lesdits moyens pour tenir (22), pour tenir ladite matière première (23) pour le tronçonnage, et agencée pour coopérer avec ladite lame mobile (26) pour cisailler ladite matière première (23) pour effectuer la coupe, et ladite lame mobile (26) et lesdits moyens formant une enclume (31) étant montés à proximité et à l'extérieur de ladite deuxième lame (27), et lesdits moyens formant une enclume (31) étant sollicités pour s'engager, en le supportant, contre un côté de ladite matière première (23) opposé à ladite lame mobile (26) à une hauteur approximativement égale à la hauteur de ladite deuxième lame (27).

3. Appareil selon la revendication 2, caractérisé en ce que ladite lame mobile (26) est montée coulissante par rapport audit appareil et a un bord coupant incliné (37) agencé pour couper progressivement à travers ladite matière première (23) à mesure que ledit bord (37) rencontre ladite deuxième lame (27).

4. Appareil selon la revendication 1, caractérisé en ce que ladite lame mobile (26) a un bord coupant incliné (37) agencé pour couper progressivement ladite matière première (23) et en ce que lesdits moyens formant une enclume (31) sont montés pour se mouvoir en alignement sensiblement parallèle avec ledit bord coupant (37) à mesure que ladite lame mobile (26) coupe ladite matière première (23).

5. Appareil selon la revendication 4, caractérisé en ce que ladite lame mobile (26) et lesdits moyens formant une enclume (31) ont des surfaces (43, 44) sensiblement planes s'étendant sensiblement parallèlement à l'axe longitudinal de ladite matière première (23).

6. Appareil selon la revendication 1, caractérisé en ce que lesdits moyens formant une enclume (31) sont montés pour se mouvoir dans un sens longeant ledit bord coupant (37) de ladite lame mobile (26).

7. Appareil selon la revendication 6, caractérisé en ce que lesdits moyens formant une enclume (31) sont constitués par un ensemble de plaques coulissantes (46, 47) montées pour décrire un mouvement alternatif, sollicitées élastiquement vers ladite lame (26).

8. Appareil selon la revendication 7, caractérisé en ce que ledit ensemble de plaques coulissantes (46, 47) comprend une première plaque coulissante (46) positionnée pour s'engager sur lesdites bandes (23a) et une deuxième plaque coulissante (47) montée sur le côté de ladite première plaque coulissante (46) éloigné de ladite lame mobile (26).

9. Appareil selon la revendication 8, caractérisé en ce que ladite première plaque coulissante (46) est montée pivotante par rapport à ladite deuxième plaque coulissante (47), et ladite deuxième plaque coulissante (47) est montée coulissante par rapport audit appareil (21) pour se déplacer latéralement par rapport à ladite lame mobile (26) quand ladite lame mobile (26) se déplace.

10. Appareil selon l'une quelconque des revendications 1 à 9, caractérisé en ce que lesdits moyens de serrage (28) sont en outre agencé pour libérer lesdites bandes (23a) après un déplacement latéral des bords latéraux desdites bandes, et en ce que lesdits moyens pour tenir (22) sont agencés pour déplacer la bande coupée (23a) hors de sa position entre ladite lame mobile (26) et lesdits moyens formant une enclume (31) lors de l'avance de ladite matière première (23) après la libération par lesdits moyens de serrage (28).

11. Appareil selon la revendication 10, caractérisé en ce que ladite lame mobile (26) est montée pour s'éloigner desdits moyens formant une enclume (31) pour effectuer la libération desdites bandes (23a).

12. Appareil selon la revendication 1, caractérisé en ce que:
ladite lame mobile (26) est formée avec un bord coupant mobile (37) incliné latéralement et avec une surface (43) s'engageant sur la bande à l'extérieur dudit bord coupant (37), et ladite lame mobile (26) étant montée pour un mouvement alternatif coulissant à proximité desdits moyens pour tenir (28);

ledits moyens de coupe (24) comprennent une lame fixe (27) ayant un bord coupant fixe (38) positionné pour coopérer avec ledit bord coupant mobile (37) pour effectuer la coupe, ladite lame fixe (27) ayant une surface pour s'engager sur la matière première, intérieurement par rapport audit bord coupant fixe (38), positionnée à l'opposé desdits moyens pour tenir (28) pour coopérer au maintien de ladite matière première (23) pour la coupe;

lesdits moyens formant une enclume (31) comprennent un ensemble de plaques coulissantes (46, 47) montées coulissantes à proximité de ladite lame fixe (27) et ayant une surface (44) s'engageant sur la bande, cette surface (44) faisant face à ladite surface (43) de ladite lame mobile (26) qui s'engage sur la bande; et

un dudit moyen formant une enclume (31) et de ladite lame mobile (26) étant monté pour que le mouvement de sa surface (44, 43) s'engageant sur la bande, le long de la bande (23a) par rapport à la surface (43, 44) de la surface s'engageant sur la bande, du restant de ladite lame mobile (26) et dudit moyen formant une enclume (31), pour effectuer la séparation des bords, adhérant entre eux, des bandes découpées (23a) après le découpage à partir de la matière première (23).

13. Appareil selon la revendication 12, caractérisé en ce que ladite surface (43, 44) s'engageant sur la bande, sur ladite lame mobile (26) et sur ledit moyen formant une enclume (31), sont sensiblement planes et ont sensiblement la même largeur, et en ce que ledit ensemble de plaques coulissantes (46, 47) comprend une première plaque coulissante (46) et une deuxième plaque coulissante (47), ladite première plaque coulissante (46) étant accouplée de manière pivotante à ladite deuxième plaque coulissante (47) et étant sollicitée pour s'écarter de ladite deuxième plaque coulissante (47), et ladite deuxième plaque coulissante (47) étant montée coulissante par rapport audit appareil (21) et sollicitée élastiquement vers ladite lame mobile (26).

14. Appareil selon la revendication 13, caractérisé en ce que ladite deuxième plaque coulissante (47) est montée pour un mouvement coulissant selon un angle aigu par rapport à l'axe de mouvement de ladite lame mobile (26).

15. Appareil selon la revendication 12, caractérisé en ce que ledit moyen (71) d'alimentation en matière première est formé pour faire avancer ladite matière première (23) vers lesdits moyens pour tenir (22) lors du dégagement du serrage desdites bandes (23a) par ladite lame mobile (26) et ledit moyen formant une enclume (31) et lors du dégagement de ladite matière première (23) par lesdits moyens pour tenir (22), pour éjecter les bandes coupées (23a) hors desdits moyens de serrage (28).

16. Appareil selon la revendication 15, caractérisé en ce que ledit moyen (71) d'alimentation en matière première est constitué par un chariot mobile à course réglable permettant la variation de la largeur des bandes élastiques (23a) découpées à partir de la matière première (23).

17. Appareil selon la revendication 12, et des moyens (61) de manipulation des bandes positionnés près dudit moyen formant une enclume (31) pour recevoir les bandes (23a) lorsqu'elles cessent d'être serrées entre ladite lame mobile et ledit moyen formant une enclume (31).

18. Procédé de tronçonnage de bandes élastiques (23a) ou analogues, à partir de la matière première tubulaire (23), comprenant des moyens (22) pour tenir la matière première, comprenant l'alimentation périodique en matière première pour l'avancer vers les moyens (22) pour tenir la matière première, le maintien de la matière première dans les moyens pour tenir, entre les mouvement d'avance, le découpage d'une bande élastique (23a) à partir de la matière première avec une lame mobile (26) montée près desdits moyens pour tenir (22) de manière à se déplacer pour effectuer la coupe de ladite matière première (23) tout en serrant simultanément la bande avec des moyens de serrage (28) de la bande, montés près de ladite lame mobile (26) et formés pour saisir une bande à mesure qu'elle est découpée à partir de ladite matière première;

caractérisé en ce que lesdits moyens de serrage comprennent un moyen formant une enclume (31) monté mobile par rapport audit appareil en étant sensiblement aligné avec ladite lame mobile, ledit moyen formant une enclume étant sollicité vers ladite lame mobile (26) pour engager et saisir une bande entre ladite lame mobile et ledit moyen formant une enclume à mesure que cette bande est ainsi coupée;

en ce que le moyen formant une enclume est déplacé par ladite lame mobile et en direction de celle-ci, tout en serrant une bande au cours de son découpage à partir de ladite matière première;

et en ce que l'un dudit moyen formant une enclume et de ladite lame mobile est entraîné dans une direction longeant le bord coupant (37) de la lame mobile, tout en saisissant une bande pour déplacer latéralement les bords coupés adjacents de ladite bande, suffisamment pour rompre toute adhérence de ces bords entre eux, survenue lors du tronçonnage.

FIG._1.

FIG._2.

1

FIG._3

FIG._4.

2

EP 0 174 831 B1

FIG._5.

FIG._6.

3

21

52
53
41
39
24
26
23
23a
44
41
61
46
33
31
47
49
32

78
73
74
77
23
79
81
76
82
71
27
83

*FIG._7.*

21

86
52
53
41
39
24
26
23
62
41
61
23a
61
33
31
47
49
32

78
73
77
23
79
81
71
27

*FIG._8.*